(19) Europäisches Patentamt
European Patent Office
Office européen des brevets

(11) Numéro de publication : **0 473 511 B1**

(12) # FASCICULE DE BREVET EUROPEEN

(45) Date de publication du fascicule du brevet : **15.03.95 Bulletin 95/11**

(51) Int. Cl.[6] : **H01F 1/00,** H01B 1/12

(21) Numéro de dépôt : **91402324.7**

(22) Date de dépôt : **28.08.91**

(54) **Matériau à base de polymère conducteur électronique comprenant des particules magnétiques et son procédé de fabrication.**

(30) Priorité : **31.08.90 FR 9010883**

(43) Date de publication de la demande : **04.03.92 Bulletin 92/10**

(45) Mention de la délivrance du brevet : **15.03.95 Bulletin 95/11**

(84) Etats contractants désignés : **AT BE CH DE DK ES FR GB GR IT LI LU NL SE**

(56) Documents cités :
**EP-A- 0 223 336**
**EP-A- 0 336 468**
**JAPANESE JOURNAL OF APPLIED PHYSICS. vol. 24, no. 9, Septembre 1985,TOKYO JP pages 687 - 687; K.YOSHINO ET AL.: 'Preparation of Magnetic Conducting Polymer and Its Characteristics'**
**PATENT ABSTRACTS OF JAPAN vol. 11, no. 106 (C-414)(2553)3 Avril 1987 & JP-61254 669 ( KATSUMO YOSHINO ) 12 Novembre 1986 * abrégé ***
**JOURNAL OF THE ELECTROCHEMICAL SOCIETY. vol. 136, no. 6, Juin 1990,MANCHESTER, NEW HAMPSHIRE US pages 1793 - 1796; K.KAWAI ET AL.:'ELECTROCHEMICAL SYNTHESIS OF POLYPYRROLE FILMS CONTAINING TiO2 POWDERPARTICLES.'**

(73) Titulaire : **COMMISSARIAT A L'ENERGIE ATOMIQUE**
**31-33, rue de la Fédération**
**F-75015 Paris (FR)**
(84) **CH DE ES FR GB IT LI NL SE**
Titulaire : **SOLVAY (Société Anonyme)**
**Rue du Prince Albert, 33**
**B-1050 Bruxelles (BE)**
(84) **AT BE CH DE DK ES FR GB GR IT LI LU NL SE**

(72) Inventeur : **Bidan, Gérard**
**3 rue des Trois Epis**
**F-38100 Grenoble (FR)**
Inventeur : **Chardon, Sylvie**
**9 rue de la Liberté**
**F-38130 Echirolles (FR)**
Inventeur : **Hannecart, Etienne**
**38 Arborétum laan**
**B-3080 Tervuren (BE)**
Inventeur : **Massart, René**
**14 rue Janisset**
**F-77240 Cesson (FR)**

(74) Mandataire : **Des Termes, Monique et al**
**Société Brevatome**
**25, rue de Ponthieu**
**F-75008 Paris (FR)**

**EP 0 473 511 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet un matériau conducteur de l'électricité possédant de plus des propriétés magnétiques.

De façon plus précise, elle concerne un matériau conducteur de l'électricité constitué d'un polymère conducteur électronique dans lequel sont réparties de façon homogène des particules magnétiques.

Des matériaux de ce type réalisés sous la forme de couches minces d'épaisseur contrôlable, déposées ou non sur un support, ou sous la forme de poudre sont très intéressants pour la réalisation d'éléments de stockage de l'information car grâce à leurs propriétés conductrices et magnétiques, ils permettent le stockage d'informations multiples.

Pour la réalisation de tels matériaux, il convient donc d'immobiliser des particules magnétiques dans un polymère conducteur électronique en les dispersant de façon homogène dans ce polymère, et de pouvoir régler à la valeur voulue la quantité de particules magnétiques dispersées.

On connaît des polymères conducteurs électroniques tels que le polypyrrole, le polythiophène et la polyaniline ; ceux-ci peuvent être préparés par oxydation chimique ou électrochimique des monomères correspondants, ce qui conduit à des polymères dopés par un ion approprié, généralement un anion. On peut utiliser des anions particuliers tels que les hétéropolyanions pour améliorer l'usage des propriétés catalytiques de ces hétéropolyanions par inclusion dans un polymère conducteur, comme il est décrit dans le document FR-A- 2 625 598.

Dans ce document, on réalise le dopage par l'hétéropolyanion lors de la synthèse du polymère conducteur électronique en ajoutant cet hétéropolyanion dans la solution de monomères utilisée, par exemple une solution dans l'acétonitrile. Ce dopage peut donc être réalisé facilement lors de la synthèse en raison de la petite taille ( 10Å) et du caractère anionique du dopant à inclure dans le polymère.

En revanche, dans le cas de particules magnétiques, il ne s'agit pas d'un dopant naturellement anionique et les particules ont des tailles plus importantes ( 100Å) ; aussi leur inclusion lors de la synthèse du polymère pose certains problèmes.

Yoneyama et al ont décrit dans Chemistry Letters, 1989, p. 1067-1070, l'incorporation de particules d'oxyde métallique dans des films de polypyrrole en chargeant négativement ces particules d'oxyde pour qu'elles puissent jouer le rôle de dopant comme les hétéropolyanions. Dans ce cas, pour que les particules d'oxyde soient chargées négativement, il est nécessaire de réaliser la polymérisation du pyrrole dans une solution aqueuse ayant un pH approprié supérieur au point isoélectrique de l'oxyde, mais inférieur à 11. Il s'ensuit, comme cela a été précisé récemment dans J. Electrochem. Soc., 1990, vol. 137, p. 1793-1796, que le polypyrrole synthétisé dans ces conditions de pH élevé est souvent mauvais conducteur ou même isolant, ce qui inhibe toute croissance électrochimique du film.

Lorsqu'on disperse des particules magnétiques telles que des particules d'oxyde de formule $Fe_2MO_4$ dans laquelle M est un atome de métal bivalent, dans une solution aqueuse, on peut obtenir des particules chargées superficiellement mais la nature de la charge varie selon qu'il s'agit d'un milieu acide ou d'un milieu basique. Ainsi, ces particules deviennent cationiques en milieu acide alors qu'elles sont anioniques en milieu basique et totalement déchargées à un pH de 7,5 environ. Cette charge des particules est due à l'absorption du ligand OH provenant de la solution aqueuse sur des atomes de fer superficiels et ce ligand confère aux grains des charges négatives en milieu alcalin et positives en milieu acide.

De plus, pour que les particules soient dispersées de façon homogène dans le polymère au cours de la synthèse de celui-ci, il est nécessaire qu'elles restent en suspension dans le milieu utilisé pour la polymérisation, c'est-à-dire qu'il ne doit pas y avoir de possibilité de floculation de la suspension.

Ainsi, dans le cas de particules magnétiques, il est nécessaire de respecter des conditions très précises pour que les particules soient chargées négativement et restent en suspension, ce qui est rarement compatible avec les conditions utilisées pour la synthèse de polymères conducteurs électroniques.

Des polymères conducteurs contenant des particules magnétiques peuvent toutefois être préparés par voie électrochimique en dispersant les particules sur l'électrode de dépôt avant électropolymérisation d'un monomère précurseur du polymère conducteur, ou après dépôt d'une mince couche de polymère conducteur comme il est décrit dans Patent Abstracts of Japan, vol. 11, n° 106 (C-414) (2535), 3 avril 1987 - JP-A- 61 254669 et dans Japanese Journal of Applied Physics, vol. 24, n° 9, Sept 1985, p. L 687-L 688. Dans les deux cas, on obtient une dispersion des particules sous forme laminaire.

On peut aussi obtenir un polymère conducteur contenant des particules magnétiques en mélangeant uniformément le polymère à l'état fondu avec les particules magnétiques comme il est décrit dans le document JP-A- 61 254 669 susmentionné.

Le document EP-A- 223 336 décrit un matériau à propriétés électriques et magnétiques constitué par un polymère contenant dans sa chaine des atomes d'un métal de transition.

Un tel matériau n'a pas la structure d'un matériau composite.

La présente invention a précisément pour objet un polymère conducteur électronique dans lequel sont dispersées des particules magnétiques permanentes, qui peut être préparé en utilisant divers milieux à partir d'une suspension de particules magnétiques adaptée à ces divers milieux.

Selon l'invention, ce matériau conducteur de l'électricité qui possède des propriétés magnétiques, comprend un polymère conducteur électronique ou un latex d'un polymère conducteur électronique dans lequel sont dispersées de façon homogène

1) des particules magnétiques permanentes, la plage des dimensions de particules allant de 5 à 20 nm, liées chimiquement au polymère par une liaison covalente, une liaison ionique ou une liaison complexante, éventuellement par l'intermédiaire d'un composé chimique organique, ou

2) des particules magnétiques permanentes, la plage des dimensions de particules allant de 5 à 20 nm, sur lesquelles sont fixés des groupes organiques chargés positivement ou négativement pour jouer le rôle de dopant du polymère.

Les polymères conducteurs électroniques utilisés dans l'invention peuvent être des polymères conjugués tels que les polypyrroles, les polythiophènes et les polyanilines. On peut aussi utiliser dans l'invention des polymères de dérivés substitués du thiophène, du pyrrole ou de l'aniline, comme les polyalkylthiophènes, en particulier les poly(alkyl en $C_6$ à $C_{12}$) thiophènes.

A titre d'exemple, les dérivés substitués du pyrrole, du thiophène et de l'aniline peuvent répondre à la formule :

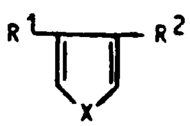 (I) 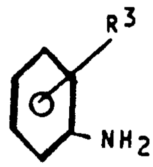 (II)

dans laquelle X représente S ou $NR^3$ avec $R^3$ étant un atome d'hydrogène, un radical alkyle ou un radical aryle, et $R^1$ et $R^2$ qui peuvent être identiques ou différents, représentent un atome d'hydrogène, un radical alkyle linéaire ou ramifié, par exemple un radical alkyle de 2 à 20 atomes de carbone, éventuellement substitué par des groupements à atome d'azote, de soufre ou d'oxygène, ou un radical aryle, par exemple phényle ou alkylpyridine. $R^1$ et $R^2$ peuvent aussi représenter des groupements chargés négativement ou chargés positivement, par exemple des groupements acides ou basiques.

On peut aussi utiliser dans l'invention des polymères conjugués obtenus à partir de paraphénylènediamine, d'acétylène, de benzène et de leurs dérivés substitués. Des polymères solubles (polymères d'alkylthiophène), des polymères à précurseurs solubles (polyparaphénylène vinylène) ou en émulsion latex peuvent aussi être utilisés, en particulier pour la synthèse chimique.

Les particules magnétiques permanentes incluses dans le polymère conducteur électronique sont de préférence des particules d'oxyde répondant à la formule :

$$Fe_2MO_4$$

dans laquelle M est un atome de métal bivalent choisi parmi Fe, Co, Mn, Cu et Ni.

A titre d'exemple, on peut utiliser en particulier l'oxyde de fer $\gamma$-$Fe_2O_3$ (maghémite).

Ces particules ont généralement des dimensions faibles, allant de 5 à 20nm.

Dans le matériau conducteur de l'invention, la quantité de particules magnétiques présente dans le polymère conducteur est choisie en fonction des propriétés que l'on veut obtenir.

Les matériaux de l'invention peuvent être préparés, soit par des procédés de polymérisation directe d'un monomère approprié, en présence ou non d'une suspension colloïdale des particules magnétiques à inclure, soit par un procédé permettant d'échanger les ions dopants présents dans un polymère conducteur électronique déjà réalisé par des particules magnétiques chargées.

Les procédés de polymérisation directe peuvent être mis en oeuvre de trois façons différentes.

Ainsi, selon un premier mode de réalisation du procédé de l'invention, celui-ci, consiste à polymériser un monomère précurseur du polymère conducteur électronique, dans un milieu comprenant une suspension colloïdale de particules magnétiques auxquelles sont fixés des groupes organiques chargés négativement.

Dans ce premier mode de réalisation, on utilise donc une suspension colloïdale de particules magnétiques portant en surface des charges négatives, pour que ces particules jouent le rôle d'ions dopants du polymère.

Ces charges négatives peuvent provenir d'agents complexants capables de complexer un élément de la particule magnétique tout en conservant un groupe anionique libre, par exemple un groupe acide comme $COO^-$, $SO_3^-$, $OSO_3^-$ ou $PO_4^{2-}$.

Lorsque la particule magnétique contient du fer, on peut utiliser les agents complexant le fer et possédant de plus un groupe acide disponible.

A titre d'exemples de tels agents complexants, on peut citer les polyacides polyalcools aliphatiques saturés ou non dont l'un ou plusieurs carbones portent à la fois une fonction acide carboxylique et une fonction alcool, tels que l'acide citrique, l'acide tartrique, l'acide tartronique, l'acide mésoxalique, l'acide malique, l'acide glutarique.

Ces complexants peuvent aussi être des composés non-aliphatiques, notamment aromatiques, auquel cas le groupement OH peut être plus éloigné du groupement carboxylique, comme dans le cas de l'acide 5 sulfosalicylique, de l'acide calconcarboxylique, c'est-à-dire l'acide 3-hydroxy-4-(2-hydroxy-4-sulfo-1-naphtylazo)-2-naphtalène carboxylique de formule :

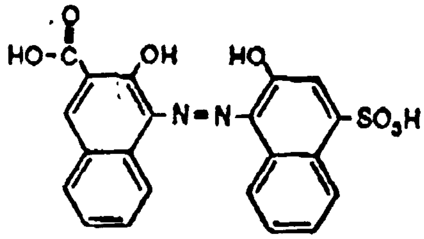

et le chrome azurol S de formule

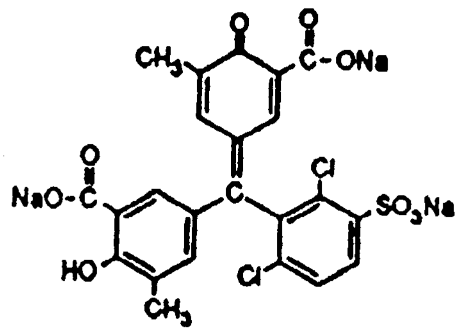

Certains composés contenant des hétérocycles se fixent également, notamment l'acide ascorbique.

Ces molécules complexant le fer peuvent aussi comprendre un groupement -SH à la place du groupement -OH, par exemple l'acide 2,3-dimercaptosuccinique, qui peut se complexer sur les particules.

La condition principale pour que les particules une fois complexées puissent être utilisées dans l'invention est que la molécule complexante, une fois fixée, possède encore au moins une fonction ionisable capable d'être chargée négativement.

Les particules magnétiques modifiées comportant ces charges négatives peuvent être préparées en traitant par un agent complexant approprié une suspension aqueuse de particules magnétiques non modifiées, telle que les fluides magnétiques décrits dans FR-A- 2 461 521, qui sont des solutions aqueuses de polyoxoanions de Fe(III) et d'au moins un métal au degré d'oxydation (II) avec un cation associé.

Ainsi, on peut préparer des particules magnétiques sur lesquelles sont fixés des anions citrates en ajoutant de l'acide citrique à une suspension de particules de $MFe_2O_4$ dans de l'acide nitrique, en remettant en suspension dans de l'eau le précipité obtenu et en ajoutant de l'hydroxyde de tétraméthylammonium.

On obtient ainsi des particules magnétiques liées par une liaison de coordination aux anions fixés dont les charges sont compensées par un contre-ion tel que $N^+(CH_3)_4$, présent dans la solution.

Grâce au choix de l'anion fixé, on peut obtenir une suspension stable de particules conservant leurs charges négatives dans les conditions de polymerisation choisies.

Ces particules modifiées sont donc différentes des polyoxoanions de départ et elles permettent d'utiliser divers milieux et diverses conditions de polymérisation, ce qui n'était pas envisageable avec les particules non modifiées.

Selon l'invention, la polymérisation du monomère en présence de la suspension colloïdale de particules magnétiques modifiées peut être effectuée, soit par voie électrochimique, soit par voie chimique.

Lorsqu'on opère par voie électrochimique, la suspension colloïdale de particules magnétiques modifiées peut jouer le rôle d'électrolyte, mais on peut aussi ajouter au milieu de polymérisation des électrolytes classiques tels que des perchlorates comme le perchlorate de lithium ou de tétrabutylammonium, des chlorures comme le chlorure de sodium, des sulfonates comme le polystyrène sulfonate de sodium, $(C_4H_9)_4N^+CF_3\text{-}SO_3^-$, $Na^+CH_3\text{-}C_6H_5\text{-}SO_3^-$, $(C_2H_5)_4N^+CF_3SO_3^-$, et des sulfates comme $Na^+CH_3(CH_2)_{11}\text{-}OSO_3^-$.

Pour réaliser l'oxydation du monomère par voie électrochimique, on applique une différence de potentiel entre deux électrodes immergées dans la solution du monomère qui comprend la suspension colloïdale de particules magnétiques, et on forme ainsi directement sur l'une des électrodes un dépôt de polymère conducteur électronique dopé par les particules magnétiques chargées.

La polymérisation par oxydation électrochimique du monomère conduit à un polymère chargé et correspond au schéma réactionnel suivant, dans le cas du pyrrole :

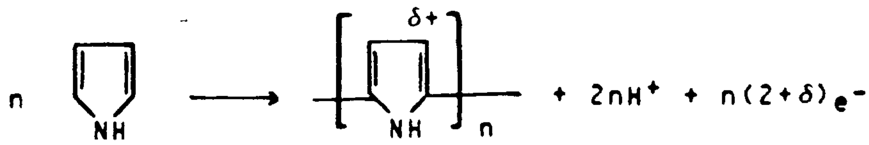

Les charges positives du polymère sont compensées par des anions provenant de l'électrolyte qui joue le rôle de dopant. Dans l'invention ces ions dopants sont constitués par les particules magnétiques modifiées chargées négativement qui sont de la sorte réparties de façon homogène dans le polymère conducteur.

Lorsqu'on associe un électrolyte classique à la suspension colloïdale de particules magnétiques modifiées, il y a compétition entre les particules magnétiques et l'anion de l'électrolyte ajouté pour les sites chargés positivement du polymère, ce qui conduit à un polymère comprenant deux types d'ions dopants. On peut régler de la sorte la quantité de particules magnétiques présentes dans le polymère formé en choisissant de façon appropriée la quantité d'électrolyte ajoutée.

Les électrodes utilisées pour le dépôt du polymère conducteur peuvent être de différents types. Elles peuvent être réalisées par exemple, en platine, en carbone, en or ou en oxyde mixte d'étain et d'indium.

Les particules magnétiques d'oxyde de formule $Fe_2MO_4$ utilisées dans ce premier mode de réalisation de l'invention peuvent être préparées par un procédé comprenant une réaction de coprécipitation en milieu alcalin d'un mélange de sel ferrique et de sel du métal divalent M, suivi d'un traitement de stabilisation des particules obtenues pour modifier leur surface par fixation de groupes organiques chargés négativement.

Dans ce premier mode de réalisation de l'invention, on peut aussi réaliser la polymérisation du monomère par voie chimique au moyen d'un agent oxydant approprié qui peut être un composé inorganique, par exemple un persulfate ou un sel métallique comme le chlorure ferrique, ou un composé organique chargé ou non chargé comme le chloranil et la dichlorodicyanobenzoquinone (DDQ).

Dans ce cas, on opère comme précédemment en présence d'une suspension colloïdale de particules magnétiques modifiées, c'est-à-dire portant des groupes organiques chargés négativement, pour doper également le polymère par ces particules.

La réaction de polymérisation est identique à celle décrite précédemment pour la polymérisation par oxydation électrochimique, et l'on peut également régler la quantité de particules magnétiques introduites dans le polymère conducteur en ajoutant au milieu d'autres anions dopants.

En fin d'opération, on récupère le polymère conducteur dopé sous la forme de précipité que l'on sépare de la solution.

Selon une variante, on peut réaliser la réaction de polymèrisation chimique dans un milieu comprenant des additifs permettant de former un latex de polymère, c'est-à-dire une suspension de particules de polymère d'un diamètre d'environ 100nm et d'éviter ainsi la coagulation du polymère sous forme de poudre.

Ces additifs sont par exemple l'acétate de polyvinyle hydrolysé et un agent tensioactif tel que le dodécylsulfate de sodium.

L'obtention de latex de polymère conducteur au moyen de tels additifs, est décrite par exemple dans EP-A- 336 468 (Solvay).

Ces additifs ont pour effet d'empêcher la coagulation en poudre du polymère, par exemple du polypyrrole, lors de sa préparation par voie chimique, et conduisent à la formation de latex, c'est-à-dire d'une suspension de particules de polymère ayant un diamètre d'environ 100nm. En réalisant, conformément à l'invention, la synthèse chimique du polymère en présence de ces additifs et d'une suspension colloïdale de particules magnétiques, on obtient l'inclusion des particules colloïdales magnétiques dans les particules de latex. Ceci est possible grâce à la différence de taille des particules, qui est d'environ 1 ordre de grandeur entre la grosse particule de latex ($\simeq$ 100nm) et la particule colloïdale magnétique ($\simeq$ 10nm).

Les milieux, c'est-à-dire les solvants utilisés dans ce premier mode de réalisation de l'invention pour la

polymérisation chimique ou électrochimique du monomère précurseur peuvent être de différents types et dépendent en particulier de la solubilité et de la stabilité du monomère et de la suspension colloïdale de particules magnétiques utilisée.

Avec des particules magnétiques formées d'oxyde $Fe_2MO_4$ avec M représentant un atome de métal bivalent tel que Fe, Co ou Mn, et un monomère constitué par du pyrrole ou l'un de ses dérivés substitués, on peut utiliser des solvants organiques par exemple l'acétonitrile, l'alcool éthylique, l'éther, des solvants aqueux ou des solvants mixtes (eau - acétonitrile, eau - chlorure de méthylène). Lorsque le monomère est l'aniline, on doit utiliser un milieu acide. Lorsqu'il s'agit du thiophène, on préfère un milieu totalement anhydre, bien que l'on puisse aussi utiliser une émulsion de thiophène dans l'eau.

Ce premier mode de réalisation du procédé de l'invention est donc très avantageux puisqu'il permet, en choisissant de façon appropriée la nature des groupes chargés négativement fixés sur les particules magnétiques, de réaliser la polymérisation du monomère dans le solvant et les conditions les plus appropriées, sans rencontrer de problèmes de stabilité et de compatibilité pour la suspension colloïdale de particules magnétiques utilisée.

De plus, ce procédé permet un contrôle précis de la quantité de particules magnétiques introduites dans le polymère conducteur en utilisant, lors de la synthèse du polymère, la compétition entre les particules magnétiques et un autre anion dopant classique.

On peut ainsi obtenir par ce premier mode de réalisation de l'invention, un film déposé ou non sur un support (électrode) ou encore une poudre du polymère conducteur dopé par les particules magnétiques. Généralement, on soumet la poudre ou le film à un lavage suivi d'un séchage sous vide, à une température appropriée qui dépend en particulier du solvant utilisé pour le lavage et de la stabilité du polymère formé.

Les poudres peuvent être utilisées telles quelles, ou bien pressées sous la forme de pastilles ou encore frittées avec différents additifs. On peut aussi disperser ces poudres dans un gel.

Lorsque le polymère est préparé par voie électrochimique, on peut utiliser directement le film déposé sur l'électrode, ou le décoller de cette électrode pour récupérer uniquement le polymère conducteur dopé par les particules magnétiques. Dans ce dernier cas, le film peut être utilisé tel quel ou sous la forme de poudre après un broyage approprié.

Selon un second mode de réalisation du procédé de l'invention, celui-ci consiste à polymériser un monomère précurseur du polymère conducteur électronique dans un milieu comprenant une suspension colloïdale de particules magnétiques auxquelles sont fixés des groupes organiques chargés positivement.

Ce second mode de réalisation de l'invention est adapté au cas où la charge globale du polymère formé par polymérisation chimique ou électrochimique du monomère est négative, en raison de la présence sur le monomère de substituants chargés négativement.

Dans ce cas, les charges négatives du polymère sont compensées par les charges positives des particules magnétiques modifiées présentes dans le milieu de polymérisation.

Comme dans le premier mode de réalisation du procédé, la polymérisation peut être effectuée par voie chimique ou électrochimique, en présence ou non d'un électrolyte classique. Dans le cas où l'on utilise un électrolyte classique, on règle également la quantité de particules magnétiques dispersées dans le polymère en choisissant de façon appropriée la quantité d'électrolyte ajoutée.

Les particules magnétiques modifiées comportant des groupes organiques chargés positivement peuvent être préparées en traitant par un agent complexant approprié une suspension aqueuse de particules non modifiées telle que les fluides magnétiques du FR-A- 2 461 521.

L'agent complexant utilisé est une molécule complexante qui, une fois fixée sur la particule, possède encore au moins une fonction ionisable capable de maintenir une charge positive sur la particule, par exemple une fonction ammonium ou phosphonium quaternaire.

Dans ce second mode de réalisation du procédé, les particules magnétiques compensent l'excès de charge négative par rapport à celles neutralisant le dopage positif du polymère.

A titre d'exemple de polymère obtenu dans ces conditions, on peut citer le polypyrrole de formule :

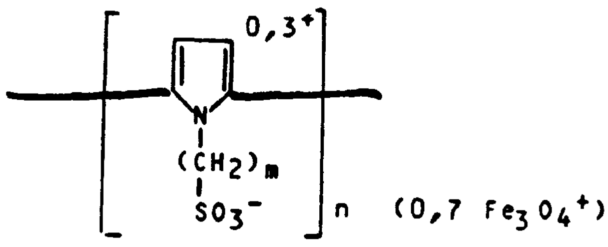

m = 2 à 20

Selon un troisième mode de réalisation du procédé de l'invention, on prépare le polymère conducteur comprenant les particules magnétiques par polymérisation d'un monomère précurseur lié chimiquement à une particule magnétique.

Comme précédemment, la polymérisation peut être effectuée par oxydation chimique ou électrochimique.

Dans ce troisième mode de réalisation du procédé de l'invention, on utilise ainsi un monomère précurseur lié chimiquement à une particule magnétique, ce qui assure d'inclure directement la particule dans le polymère conducteur lors de la polymérisation.

La particule magnétique peut être liée au monomère par une liaison covalente, une liaison ionique ou une liaison complexante, éventuellement par l'intermédiaire d'un bras espaceur.

Dans un premier temps, il s'agit donc de substituer le monomère précurseur par une entité dont l'une des extrémités peut se fixer à la surface des particules magnétiques, par complexation d'atomes métalliques des particules ou par compensation des charges superficielles de ces particules. Cette substitution du monomère peut se faire par l'intermédiaire d'une chaîne aliphatique, aromatique ou mixte.

Lorsque le monomère de départ répond à la formule

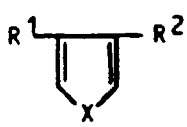

(I)

dans laquelle X, $R^1$ et $R^2$ ont la signification donnée ci-dessus, cette substitution est effectuée sur $R^1$ ou $R^2$. Lorsque X représente $NR^3$, elle est plutôt effectuée sur $R^3$.

Lors de la polymérisation du monomère précurseur ainsi modifié, on aura l'inclusion dans le polymère des anions dopants classiques conférant au polymère le caractère conducteur.

Dans ce troisième mode de réalisation du procédé de l'invention, on peut contrôler la quantité de particules magnétiques présentes dans le polymère conducteur en réalisant la copolymérisation des monomères précurseurs liés chimiquement aux particules magnétiques, avec des monomères précurseurs non liés à des particules magnétiques. Ainsi, en réglant la quantité de monomère non lié présente dans le milieu de polymérisation, on peut contrôler la quantité de particules magnétiques dispersées dans le polymère conducteur.

Les monomères liés à des particules magnétiques utilisés dans ce troisième mode de mise en oeuvre du procédé de l'invention peuvent être préparés en substituant le monomère précurseur par une chaîne aliphatique ou aromatique comportant à son extrémité libre un groupement complexant du fer, par exemple un carbone portant à la fois une fonction acide carboxylique et une fonction alcool.

A titre d'exemple de tels monomères substitués, on peut citer ceux répondant aux formules suivantes :

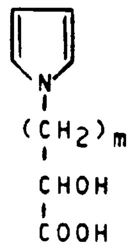

et

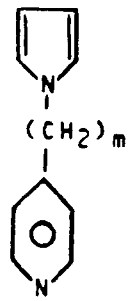

m = 2 à 20

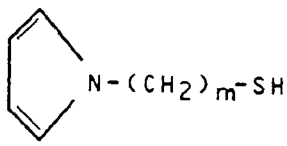

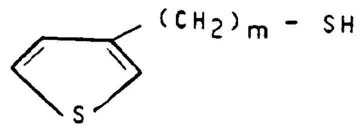

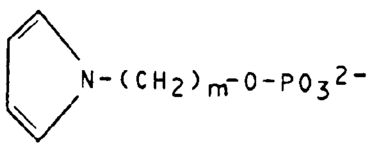

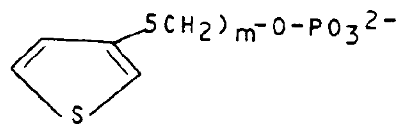

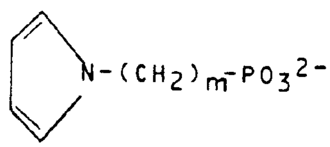

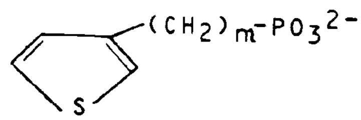

Ces thiophènes ou pyrroles modifiés peuvent être obtenus à partir des alcools correspondants en réalisant les réactions suivantes illustrées dans le cas du thiophène.

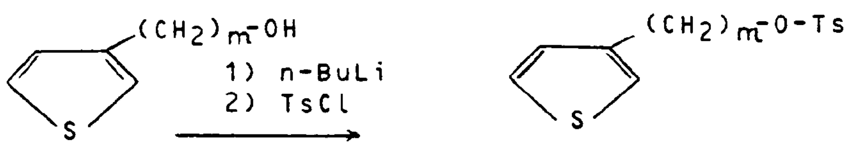


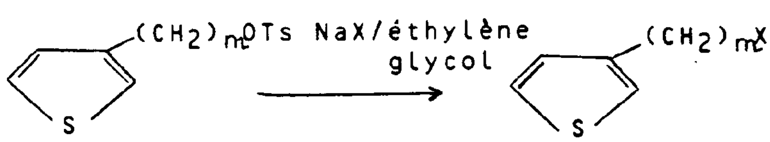


X = Br, I

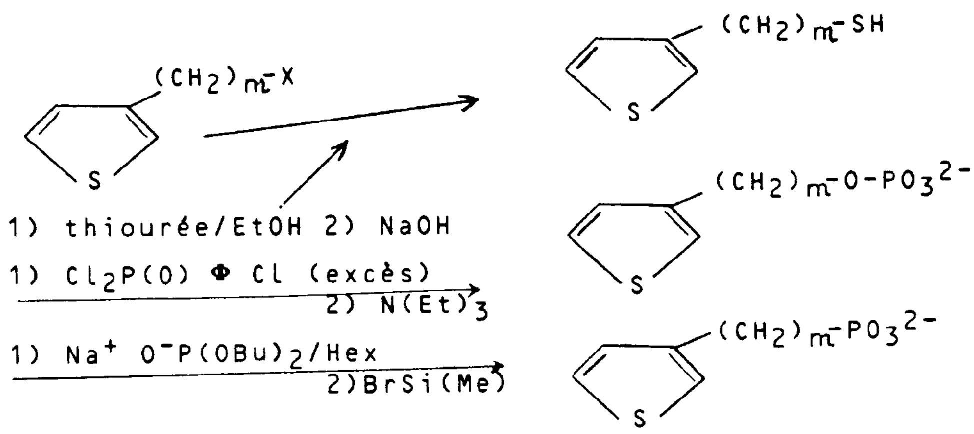


Les alcools de départ peuvent être préparés par le procédé décrit par Bidan et al, Synth. Met., 15 (1986), 49, certains sont des produits commerciaux.

Dans ce troisième mode de mise en oeuvre du procédé de l'invention, on peut aussi substituer le monomère précurseur par une chaîne aliphatique ou aromatique comportant en bout de chaîne un groupe ionisable chargé capable de compenser la charge superficielle d'une particule magnétique chargée.

A titre d'exemples de tels monomères substitués, on peut citer ceux répondant aux formules :

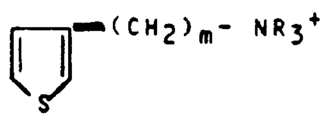

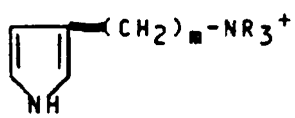

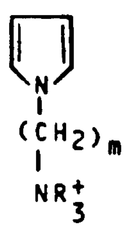

avec m = 2 à 20

R = alkyle ou aryle

Lorsqu'on utilise dans le milieu de polymérisation des monomères non liés à des particules magnétiques, il peut s'agir du même type de monomères que les monomères liés ou de monomères différents, compatibles et polymérisables avec les monomères liés.

On peut utiliser par exemple le pyrrole ou le bithiophène-2,2′ avec du thiophène substitué lié ou du pyrrole substitué lié.

Les monomères liés peuvent être préparés en mettant en contact une suspension des particules magnétiques avec une solution du monomère substitué par l'agent complexant ou le groupe ionisable capable de compenser les charges des particules en suspension.

Dans ce troisième mode de réalisation du procédé de l'invention, on peut effectuer la polymérisation par voie chimique ou électrochimique en utilisant les mêmes milieux, les mêmes conditions et les mimes modes opératoires que dans les premier et deuxième mode de réalisation du procédé de l'invention. Dans ce cas, toutefois, la stoechiométrie et les conditions d'électropolymérisation pourront litre différentes puisque la particule ne joue pas le rôle d'ion dopant.

Selon un quatrième mode de réalisation du procédé de l'invention, celui-ci consiste à polymériser par voie chimique un monomère précurseur du polymère conducteur électronique dans un milieu comprenant une suspension colloïdale de particules magnétiques modifiées par un agent tensioactif.

La présence de cet agent tensioactif sur les particules magnétiques leur confère une affinité hydrophobe, ce qui permet d'établir une liaison physico-chimique du type hydrophobe-hydrophobe avec une chaîne hydrophobe du monomère précurseur.

En effet, les têtes polaires de l'agent tensioactif se placent sur la particule magnétique et les chaînes hydrophobes de l'agent tensioactif s'écartent au contraire de la particule, ce qui leur permet de se coupler aux

chaînes hydrophobes des monomères précurseurs.

A titre d'exemple, le monomère précurseur peut être un alkylthiophène tel que l'octylthiophène et l'agent tensioactif peut être un sel de triéthanol amine d'un ester phosphorique acide.

Ce mode de réalisation du procédé de l'invention est particulièrement adapté à la synthèse chimique du poly(octylthiophène) selon le procédé décrit dans EP-A- 385 523, et permet de disperser de façon homogène des particules magnétiques dans le polymère, lors de sa synthèse.

Selon un cinquième mode de réalisation du procédé de l'invention, on prépare tout d'abord de façon classique un polymère conducteur électronique dopé par des ions, et on échange ensuite au moins une partie des ions dopant le polymère conducteur par mise en contact de celui-ci avec une suspension de particules magnétiques chargées, ayant la même charge que les ions dopants.

Ainsi, les particules magnétiques de la suspension présentent des charges positives lorsque le polymère est globalement chargé négativement, et elles présentent des charges négatives lorsque le polymère est dopé par des anions.

Dans ce cas, on peut régler la quantité de particules magnétiques incluses dans le polymère conducteur en réglant de façon appropriée la concentration en particules magnétiques de la suspension et la durée de mise en contact du polymère conducteur avec la suspension.

Les particules magnétiques utilisées dans ce cinquième mode de réalisation du procédé de l'invention peuvent être également des particules magnétiques sur la surface desquelles ont été fixés des agents complexants comportant un groupe ionisable susceptible d'être chargé négativement ou positivement.

Ainsi, on peut utiliser les mêmes particules magnétiques modifiées que dans les premier et second modes de réalisation du procédé de l'invention.

Les différents modes de réalisation du procédé de l'invention qui ont été décrits ci-dessus, sont très avantageux car ils permettent

- de disperser les particules magnétiques le long de la chaîne du polymère conducteur et de les fixer à cette chaîne par des liaisons chimiques,
- de conserver les propriétés magnétiques intrinsèques de ces particules,
- de contrôler la quantité de particules dispersées, et
- d'obtenir le polymère conducteur comportant les particules magnétiques sous la forme de film, de couche mince déposée sur un support ou de poudre.

D'autres caractéristiques et avantages de l'invention apparaîtront mieux à la lecture des exemples suivants donnés bien entendu à titre illustratif et non limitatif en référence au dessin annexé sur lequel

- les figures 1 et 2 sont des courbes de voltamétrie cyclique obtenues avec le matériau de l'exemple 1.
- La figure 3 est la courbe d'aimantation du ferrofluide utilisé dans l'exemple 3,
- La figure 4 est la courbe protométrique du ferrofluide utilisé dans l'exemple 3,
- la figure 5 représente les courbes de chronoampérométrie obtenues avec la suspension colloïdale de l'exemple 3,
- la figure 6 représente la courbe d'aimantation du ferrofluide de l'exemple 4,
- la figure 7 représente les courbes de chronoampérométrie obtenues avec la suspension colloïdale de l'exemple 4,
- la figure 8 est la courbe de voltamétrie cyclique du matériau de l'exemple 3,
- la figure 9 est la courbe de voltamétrie cyclique du matériau de l'exemple 5.

**Exemple 1** : Préparation électrochimique de polypyrrole dopé par $\gamma$-$Fe_2O_3$.

Dans cet exemple, on utilise le premier mode de réalisation du procédé de l'invention en polymérisant du pyrrole en présence d'une suspension de particules de $\gamma$-$Fe_2O_3$ dont la surface est modifiée par des groupes citrate pour être chargée négativement.

On prépare cette suspension colloïdale de particules magnétiques chargées de la façon suivante.

On part d'un ferrofluide acide nitrique synthétisé selon le brevet FR 2 461 521, à base de particules de maghemite gamma $Fe_2O_3$ dont les caractéristiques sont les suivantes :

- concentration en atomes métalliques (Fe) = 1mol/l
- acidité totale ($HNO_3$) = 0,04mol/l
- diamètre moyen des particules = 9nm,
- densité de charge superficielle = 0,2C/m$^2$.

Elle est assurée par des protons adsorbés, tels que ($H^+$ads)/(Fe) = $1{,}8.10^{-2}$.

On ajoute une solution d'acide citrique (20ml, 0,1mol/l) à 100ml de ce ferrofluide. Il se forme un précipité qui est lavé, puis remis en suspension dans l'eau (50ml), et peptisé par addition d'hydroxyde de tétraméthylammonium (4ml, 1mol/l). Le pH de la solution est voisin de 7.

On introduit ensuite cette suspension de particules chargées dans un mélange acétonitrile-eau (80/20 en volume) de façon à obtenir une solution ayant une concentration en fer de l'ordre de 0,1mol/l.

On introduit cette solution dans une cellule de 10cm$^3$ comportant un montage à 3 électrodes dont une électrode de travail constituée par un disque de platine de 2mm de diamètre, une électrode auxiliaire en platine et une électrode de référence $Ag/Ag^+$. On ajoute à la solution 340µl de pyrrole pour obtenir une concentration en pyrrole de 0,5mol/l. On dégaze la solution par passage d'argon, puis on porte l'électrode de travail au potentiel de 0,80V jusqu'à ce qu'il passe dans le circuit 6mC. On trace le voltammogramme à chaque fois que dans le circuit il passe 1mC. Les résultats obtenus avec un balayage de 50mV/s sont donnés sur la figure 1 qui représente les courbes de voltamétrie cyclique de l'électrode.

Dans ces conditions, on forme sur l'électrode de travail un dépôt de polypyrrole dopé par des particules magnétiques.

On lave ensuite l'électrode dans un mélange d'acétonitrile et d'eau (80/20 en volume), puis on étudie le comportement de l'électrode par voltampérométrie cyclique dans une solution constituée par un mélange d'acétonitrile et d'eau (90/10 en volume) contenant 0,1mol/l de perchlorate de lithium avec un balayage de l'électrode de 50mV/s.

Sur la figure 2 qui illustre la courbe de voltamétrie cyclique obtenue, on voit que le polypyrrole se comporte comme un polymère conducteur.

**Exemple 2** : Préparation électrochimique de polypyrrole dopé par des particules de $\gamma\text{-}Fe_2O_3$.

On utilise la même suspension de particules magnétiques chargées que dans l'exemple 1 et on l'introduit dans de l'eau pour obtenir une concentration en fer de l'ordre de 0,1mol/l. On introduit ensuite la solution dans une cuve de 10cm$^3$ et on la dégaze par un léger bullage d'argon sous agitation magnétique. On ajoute ensuite du pyrrole à raison de 0,5mol/l.

On réalise ensuite la polymérisation électrochimique en utilisant un montage à 3 électrodes dont une électrode de travail en oxyde mixte d'indium et d'étain de 6cm$^2$, une électrode auxiliaire en acier inoxydable de même surface et une électrode de référence $Ag/Ag^+$, reliées à un potensiostat.

On impose à l'électrode de travail un courant de 0,5mA/cm$^2$ jusqu'à ce qu'il passe dans le circuit 10,5C.

Dans ces conditions, on forme sur l'électrode de travail un dépôt de polypyrrole dopé par des particules magnétiques, ayant une épaisseur de 7 µm.

On lave ensuite l'électrode à l'eau et à l'acétonitrile trois fois successivement, puis on décolle le film de l'électrode et on le sèche sous vide aux environs de 60°C.

On mesure alors la conductivité électrique du film par la méthode des 4 pointes et on trouve une conductivité de $3,4.10^{-3}$S/cm.

On étudie les propriétés magnétiques du film par mesures de SQUID (Superconducting Quantum Interference Device). Grâce à ces mesures, on peut étudier la susceptibilité magnétique du matériau en fonction de la température et faire un dosage quantitatif du fer dans le polymère dopé.

Dans ce cas, on constate que 4 charges négatives appartenant à un macroion magnétique sont associées à 4 charges positives appartenant à la chaîne du polypyrrole.

La susceptibilité magnétique de ce matériau est constante en fonction de la température (de 2K à 260K) et elle est de l'ordre de 0,06mu/g de fer. La résonance paramagnétique électronique (RPE) du matériau donne deux signaux centrés à $g \simeq 3$ dont les largeurs de raies sont 900G (Fe) et 3G (polypyrrole).

**Exemple 3** : Préparation électrochimique de polypyrrole dopé par $\gamma\text{-}Fe_2O_3$ modifié par l'acide calconcarboxylique (PPyFFCC)

Dans cet exemple on utilise le premier mode de réalisation du procédé de l'invention avec une suspension de particules de $-Fe_2O_3$ dont la surface est modifiée par l'acide calconcarboxylique pour être chargée négativement.

L'acide calconcarboxylique répond à la formule :

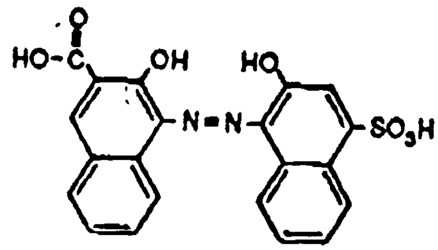

On utilise le même ferrofluide que dans l'exemple 1 et on prépare la suspension colloïdale de particules chargées de la façon suivante.

On ajoute à 70°C, sous agitation, 50ml de ferrofluide nitrate (2,59mol/l) à 100ml d'une solution à 0,1mol/l d'acide calconcarboxylique neutralisé par NaOH (à 10mol/l) et on maintient l'agitation et le chauffage à 70°C pendant 1h 30.

Après plusieurs lavages à l'acétone et à l'éther, on obtient un ferrofluide stable limpide, quine précipite pas en présence d'un champ magnétique. Après stabilisation pendant une nuit, on mesure la concentration en fer au flumètre, elle est de 0,8mol/l. Ce nouveau ferrofluide est caractérisé par la courbe d'aimantation et la courbe protométrique présentées respectivement sur les figures 3 et 4. L'aimantation a été déterminée par FONER.

On dilue ensuite ce ferrofluide par une solution aqueuse pour obtenir une concentration en fer de l'ordre de 0,1mol/l.

On réalise ensuite la polymérisation électrochimique en utilisant un montage à 3 électrodes dont une électrode de travail en oxyde mixte d'indium et d'étain de 6cm$^2$, une électrode auxiliaire en acier inoxydable de même surface et une électrode de référence $Ag/Ag^+$, reliées à un potensiostat. On ajoute à la solution du pyrrole pour obtenir une concentration en pyrrole de 0,5mol/l. On dégaze la solution par passage d'argon, puis on porte l'électrode de travail au potentiel de 0,70V qui a été choisi à partir des courbes de chronoampérométrie représentées sur la figure 5. Ces courbes ont été établies avec des solutions aqueuses ayant une concentration en pyrrole de 0,5mol/l et une concentration en ferrofluide de 0,4mol/l.

Après passage d'une quantité d'électricité suffisante pour former un dépôt d'environ 23μm, on récupère un film de polypyrrole dans lequel sont dispersées de façon homogène des particules magnétiques et on détermine la conductivité électrique du film tel quel ainsi que la conductivité du matériau sous la forme d'une pastille obtenue par compression sous 800Mpa (8t/cm$^2$). Les conductivités sont mesurées par la technique des têtes quatre pointes.

Les résultats obtenus sont donnés dans le tableau 1 qui suit.

**Exemple 4** : Préparation électrochimique de polypyrrole dopé par $\gamma$-$Fe_2O_3$ modifié par le chrome azurol S (PPy - FFAZ).

Dans cet exemple on utilise également le premier mode de réalisation du procédé de l'invention avec une suspension de particules de $\gamma$-$Fe_2O_3$ dont la surface est modifiée par du chrome azurol S, de formule

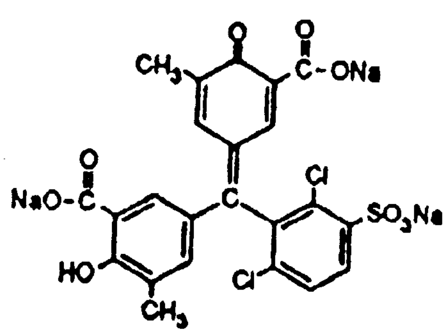

On utilise le même ferrofluide que dans les exemples 1 et 3 et on prépare la suspension colloïdale de particules chargées de la façon suivante.

On ajoute à 25ml de ferrofluide nitrate à 2,59mol/l, 100ml d'une solution à 0,1mol/l de chrome azurol S neutralisé à pH 7 par une solution de NaOH à 1mol/l, en opérant à 70°C sous agitation. Dans ce cas, l'excès

de chrome azurol S est d'environ 20%. On maintient l'agitation et le chauffage pendant 1h30, puis on soumet le précipité à plusieurs lavages et précipitations comme dans l'exemple 1. On obtient ainsi un ferrofluide dont la concentration en fer est de 0,8mol/l, déterminée au flumètre. La courbe d'aimantation de ce ferrofluide est représentée sur la figure 6.

On réalise ensuite la synthèse électrochimique du polymère dans des conditions identiques à celles présentées dans l'exemple 3, soit en utilisant :

- une concentration en pyrrole de 0,5mol/l,
- une concentration en fer de 0,1mol/l,
- de l'eau comme solvant, une électrode $Ag/Ag^{+}$ $10^{-2}$mol/l comme électrode de référence, et
- un potentiel d'électrolyse de 0,7V, choisi à partir des courbes de chronoampérométrie représentées sur la figure 7 établies dans les mêmes conditions que celles de la figure 5.

Après passage d'une quantité d'électricité correspondant à un dépôt de polypyrrole d'environ 3 μm d'épaisseur, on obtient un film dont on mesure la conductivité électrique. On mesure également la conductivité électrique du matériau sous la forme de pastilles obtenues par compression sous 800Mpa (8t/$cm^2$).

Les résultats obtenus sont donnés dans le tableau 1 qui suit.

**Exemple 5** : Préparation électrochimique de polypyrrole dopé par $\gamma$-$Fe_2O_3$ modifié par de l'acide citrique (PPy - FFCit).

On suit le même mode opératoire que dans les exemples 3 et 4 pour préparer un film de polypyrrole comportant des particules magnétiques à partir de la suspension colloïdale de particules magnétiques chargées modifiées par l'acide citrique préparée de la même façon que dans l'exemple 1, en utilisant pour la polymérisation électrochimique :

- une concentration en pyrrole de 0,5mol/l,
- une concentration en ferrofluide de 0,1mol/l dans $H_2O$ et en mesurant les conductivités électriques du film et de pastilles dans les mêmes conditions.

Les résultats obtenus sont donnés dans le tableau 1 annexé.

Au vu de ces résultats, on remarque que les conductivités électriques des films des exemples 3 et 4 sont respectivement d'environ 2 et 3 ordres de grandeur supérieure à celle du film de l'exemple 5.

Sur les figures 8 et 9, on a représenté les courbes de voltamétrie cyclique du matériau PPy-FFCl de l'exemple 3 (figure 8) et du matériau PPy - FFAZ de l'exemple 4 (figure 9). Ces courbes ont été obtenues à une vitesse de balayage de 50 mV/s dans une solution aqueuse à 0,1mol/l de $NaClO_4$.

Si l'on compare ces courbes de voltamétrie cyclique avec celle de l'exemple 1 (figure 2), on remarque que l'électroactivité des matériaux composites des exemples 3 et 4 est mieux définie que celle du matériau composite de l'exemple 1, en particulier la stabilité du cyclage électrochimique. Ceci permet de mieux contrôler le taux de dopage du matériau et par conséquent d'ajuster la conductivité électronique de ces composites.

**Exemple 6** : Préparation chimique de polypyrrole dopé par des particules de $\gamma$-$Fe_2O_3$.

On utilise la mime suspension colloïdale de particules magnétiques chargées que dans l'exemple 1 et on l'introduit avec du persulfate d'ammonium dans de l'eau de façon à obtenir une concentration en fer de 0,04mol/l et une concentration en persulfate de 0,3mol/l. On agite magnétiquement ce mélange à l'air et on lui ajoute du pyrrole de façon que le rapport des concentrations en pyrrole sur persulfate soit de 1/2,4.

La réaction démarre immédiatement car il apparaît tout de suite un précipité noir de polymère. On maintient l'agitation pendant 2 h 30, puis on filtre le mélange sur fritté. On lave le précipité plusieurs fois avec de l'eau et de l'acétonitrile pour éliminer les oligomères, et on le sèche sous vide.

On étudie ensuite les propriétés du précipité par spectrométrie infrarouge à transformée de Fourier et par résonance paramagnétique électronique.

On observe en RPE une raie large (environ 800G) caractéristique du fer. Lorsqu'on approche un aimant, la poudre est attirée. En spectrométrie infrarouge, on observe les deux bandes caractéristiques du polypyrrole : 918 et 1040$cm^{-1}$.

On peut obtenir les mêmes résultats en réalisant la polymérisation par addition du persulfate au mélange de pyrrole et de suspension de particules magnétiques.

**Exemple 7** : Préparation chimique de polypyrrole dopé par des particules de $\gamma$-$Fe_2O_3$.

On utilise dans cet exemple la même suspension de particules magnétiques chargées que dans l'exemple 1 et on la mélange à de l'eau pour obtenir une concentration en fer d'environ 0,2mol/l. On ajoute à 5ml de cette

solution (1mmol) de dichlorodicyanobenzoquinone (DDQ) qui est insoluble et on soumet la solution à une agitation magnétique à la température ambiante et à l'air, puis on lui ajoute la quantité de pyrrole nécessaire, soit 1mmol.

Un précipité noir se forme immédiatement et après 12h de temps de contact, on sépare le précipité par centrifugation, puis on le lave avec de l'eau et de l'alcool éthylique au Soxhlet. Après séchage, la poudre obtenue qui réagit à l'approche d'un aimant est pastillée et on mesure sa conductivité. Celle-ci est de $1{,}7.10^{-2}$S/cm pour une pastille de 0,35mm d'épaisseur. Le spectre infrarouge est caractéristique du polypyrrole conducteur.

**Exemple 8** : Préparation chimique de latex de polypyrrole dopé par des particules de $\gamma$-$Fe_2O_3$ (PPy - latex FFCit).

Pour cette synthèse on utilise la même suspension colloïdale que dans l'exemple 5, c'est-à-dire des particules de $\gamma$-$Fe_2O_3$ modifiées par du citrate et on opère de la façon suivante pour obtenir le latex de polymère dopé.

Dans un Erlen de 100ml, on prépare une solution d'acétate de polyvinyle hydrolysé à 88% (masse moléculaire : 120 000) dans 10ml d'eau, ce qui correspond à $3{,}4.10^{-3}$mmol d'acétate. A cette solution, on ajoute 5ml d'une solution de dodécylsulfate de sodium à 0,4mol/l, puis une solution de chlorure ferrique $FeCl_3$, $6H_20$ pour obtenir une concentration de 2,2mol/l.

A cette solution agitée magnétiquement, on ajoute goutte à goutte pendant 10min, un mélange de 0,31ml de pyrrole et de 0,6ml de la suspension colloïdale de l'exemple 5 à une concentration de 1mol/l dans 5ml d'eau et on maintient l'agitation à 20°C pendant 1h. On centrifuge à 3200 tours/min le latex obtenu et on le lave à l'eau jusqu'à ce que la solution surnageante soit incolore. On dépose ensuite le latex sur une plaque de verre et on l'étend à la spatule. On sèche le film à l'air et à la température ambiante pendant 14h.

On obtient ainsi un film noir décollable, ayant un aspect brillant, dur plus ou moins cassant.

La spectrométrie infrarouge du film (KBr) montre les bandes caractéristiques de la matrice polypyrrole à 1160-1170 et 1030-1040$cm^{-1}$.

On détermine également l'épaisseur du film avec un comparateur d'épaisseur et sa conductivité par la méthode des 4 pointes.

Le résultat obtenu est donné dans le tableau 2 qui suit.

**Exemple 9** : Préparation chimique de latex de polypyrrole dopé par des particules de $\gamma$-$Fe_2O_3$ (PPy - latex - FFCC).

On suit le même mode opératoire que dans l'exemple 8, mais en utilisant comme ferrofluide la suspension colloïdale de l'exemple 3.

Les résultats obtenus sont donnés dans le tableau 2.

**Exemple 10** : Préparation chimique de latex de polypyrrole dopé par des particules $\gamma$-$Fe_2O_3$ (PPy - latex - FFAZ).

On suit le même mode opératoire que dans l'exemple 8, mais en utilisant comme ferrofluide la suspension colloïdale de l'exemple 4.

Les résultats obtenus sont donnés dans le tableau 2.

**Exemple comparatif.**

On suit le même mode opératoire que dans l'exemple 8, mais on réalise la polymérisation sans addition de ferrofluide.

Les résultats obtenus sont donnés également dans le tableau 2.

Au vu de ces résultats, on constate que la présence de particules magnétiques dans le latex de polypyrrole diminue fortement la conductivité dans le cas où les particules sont modifiées par du citrate (exemple 8). Cette forte perte de conductivité est probablement due au dopant citrate puisque ce phénomène a déjà été observé pour les polymères obtenus par voie électrochimique.

En revanche, la présence de particules magnétiques modifiées par de l'acide calconcarboxylique ou du chrome azurol S ne modifie que très peu la conductivité du polymère puisqu'elle est similaire à la conductivité du latex de polypyrrole ne contenant pas de ferrofluide et dix fois plus grande que celle des matériaux obtenus par voie électrochimique (exemples 3 et 4).

Les films obtenus possèdent de plus de bonnes propriétés magnétiques, ils sont attirés par un aimant.

**Exemple 11** : Préparation électrochimique de poly(octylthiophène) contenant des particules de γ-$Fe_2O_3$ modifiées par un agent tensioactif.

Dans cet exemple, on utilise le quatrième mode de réalisation du procédé de l'invention, soit la modification des particules magnétiques par un agent tensioactif ou molécule amphiphile qui permet de conférer aux particules une affinité pour des chaînes hydrophobes.

On utilise ainsi le ferrofluide nitrate de l'exemple 1 et on le traite par un agent tensioactif comprenant une tête polaire et une queue hydrophobe, constitué par un sel de triéthanolamine d'un ester phosphorique acide, pour enrober chaque particule de γ-$Fe_2O_3$ de ces molécules amphiphiles (agent tensioactif).

Le ferrofluide ainsi traité est soluble dans $CHCl_3$ qui est le milieu utilisé pour la polymérisation de l'octylthiophène.

Pour préparer le ferrofluide modifié, on met en solution dans l'eau, le précipité obtenu à partir du ferrofluide nitrate utilisé dans l'exemple 1 et on lui ajoute l'agent tensioactif anionique constitué par un sel de triéthanol amine d'un ester phosphorique acide en utilisant un excès d'agent tensioactif de 20% en mole. On agite le mélange pendant 10min à chaud. Après précipitation à l'acétone et décantation magnétique, on lave le précipité 3 fois avec du methanol, puis on le dissout dans un mélange $CHCl_3$/méthanol (3/1 en volume), et on chasse lentement le méthanol par chauffage.

Dans un réacteur à 4 cols réfrigéré à 5°C, muni de deux ampoules d'addition, d'un thermomètre et d'une arrivée d'argon, on introduit 85ml de $CHCl_3$ que l'on a désoxygéné par un bullage d'argon, puis sous agitation magnétique, on ajoute 9,4g de $FeCl_3$ anhydre et on dégaze à nouveau le mélange pendant 10min.

Dans chaque ampoule, on met respectivement :

- 2ml d'eau distillée dégazée, et
- 1ml de ferrofluide modifié à une concentration de 1mol/l, 1,1ml de 3-octylthiophène, et 15ml de $CHCl_3$, le tout purgé à l'argon.

On introduit parallèlement le contenu des deux ampoules en quelques minutes, et on maintient l'agitation à 5°C pendant 1h30. Dans le mélange, on ajoute goutte à goutte 15ml d'acétonitrile sur une durée de 15min. On filtre le produit de la réaction sur fritté n°4, puis on le lave 3 fois à l'acétonitrile jusqu'à ce que le filtrat devienne incolore. On sèche le précipité sous vide pendant 5h et on obtient ainsi 900mg de précipité. Après frittage, on obtient une pastille ayant une conductivité de 1,74S.$cm^{-1}$ qui est attirée par un aimant.

**Exemple 12** : Préparation de matériaux composites polypyrrole-ferrofluide avec liaison covalente entre les chaînes du polymère et les particules magnétiques.

Dans cet exemple, on utilise le troisième mode de réalisation de l'invention, soit la polymérisation de pyrrole lié chimiquement à une particule magnétique.

Pour obtenir cette liaison, on modifie le pyrrole de façon à fixer sur celui-ci un groupement complexant SH et obtenir ainsi du pyrrole de formule :

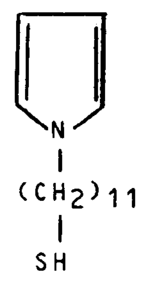

1) synthèse du 11-(pyrrol-1-yl)undécane thiol.

a) synthèse du 1 tosyl-11-(pyrrol-1-yl)undécane.

En boîte à gants, on ajoute doucement 2,24ml ($3,6.10^{-3}$mol) de n-butyl lithium à 1,6mol/l dans de l'hexane à 851mg ($3,59.10^{-3}$mol) de 11-(pyrrol-1-yl)undécanol dissous dans 10ml de tétrahydrofurane. On ajoute ensuite cette solution à une solution de chlorure de tosyle (684mg, $3,6.10^{-3}$mol) dans 10ml de THF. Après 30min d'agitation, on sort le mélange de la boîte à gants et on l'évapore à sec. On le reprend ensuite avec un mélange 50/50 d'éther et d'eau saturée en $Na_2CO_3$. On récupère la phase organique et on lave la phase aqueuse 3 fois avec de l'éther éthylique. Après séchage sur $Na_2SO_4$, on cristallise l'huile obtenue dans un mélange alcool

éthylique/éther de pétrole.

b) synthèse du 1-iodo-11(pyrrol-1-yl)undécane.

500mg (1,28 $10^{-3}$mol) du produit obtenu en a) et 395mg (3,84 $10^{-3}$mol) de NaI sont dissous dans 20ml d'éther diméthylique d'éthylène glycol et portés à reflux avec agitation magnétique pendant 1h30. Après être revenu à la température ambiante, on filtre le précipité de tosylate de sodium, puis on le lave au chloroforme. On ajoute au filtrat 2 cuillères de bisulfite de sodium, puis on le filtre à nouveau sur fritté.

c) Synthèse du 11-(pyrrol-1-yl)undécane thiol.

On mélange 385mg (1,28.$10^{-3}$mol) du produit obtenu dans l'étape b) dissous dans 20ml d'alcool éthylique avec 97mg de thiourée dans 5ml d'eau. On porte la solution au reflux pendant 23h. On la dégaze ensuite à l'argon, puis on ajoute 52mg (2,56 $10^{-3}$mol) de NaOH dans 20ml d'eau. Après 3h de reflux, on ramène le mélange réactionnel à 5°C, puis on ajoute une solution diluée de $H_2SO_4$ pour parvenir à un pH de 2. On extrait alors le produit au chloroforme, puis on le lave à l'eau. Une rapide filtration sur fritté avec de la silice donne le 11-(pyrrol-1-yl)undécane thiol.

2.Préparation du polypyrrole comportant des particules magnétiques de $\gamma$-$Fe_2O_3$.

On prépare tout d'abord une suspension colloïdale de particules magnétiques modifiées par le 11-(pyrrol-1-yl)undécane thiol obtenu précédemment.

Dans ce but, on ajoute au ferrofluide acide nitrique de l'exemple 1, du 11-(pyrrol-1-yl)undécane thiol en quantité suffisante pour modifier chaque particule de $Fe_2O_3$, puis on effectue différents lavages et précipitations à l'acétone et l'éther et on solubilise dans du chloroforme.

On réalise ensuite la polymérisation de la façon suivante.

A 100ml d'une solution à 0,1mol/l de ferrofluide modifié par le pyrrole obtenu précédemment, on ajoute 100ml d'une solution à 0,1mol/l de pyrrole non substitué, puis 20ml d'une solution à 2,3mol/l de $FeCl_3$. On filtre le précipité, on le lave à l'eau et à l'acétonitrile. Après frittage de la poudre, on obtient une pastille ayant une conductivité d'environ 10S.$cm^{-1}$.

TABLEAU 1

| Ex. | | Film | | Pastille | |
|---|---|---|---|---|---|
| | Nature du Film | épaisseur e(µm) | conductivité électrique (S x$cm^{-1}$) | épaisseur (µm) | conductivité électrique (S x $cm^{-1}$) |
| 5 | PPy-FFCit | 8 | $0,6 \times 10^{-3}$ | 17 | $0,7 \times 10^{-2}$ |
| 4 | PPy-FFAZ | 3 | 2,1 | 31 | 0,4 |
| 3 | PPy-FFCC | 23 | 0,10 | 20 | 0,54 |

TABLEAU 2

| Ex. | Matériau | épaisseur (µm) | Conductivité électrique (Sxcm-1) |
|---|---|---|---|
| comp. | PPy-latex | 34 | 13,3 |
| 8 | PPy-latex-FFCit | 31 | $2,0 \times 10^{-2}$ |
| 9 | PPy-latex-FFCC | 31 | 11,1 |
| 10 | PPy-latex-FFAZ | 93 | 3,8 |

## Revendications

1. Matériau conducteur de l'électricité ayant des propriétés magnétiques, comprenant un polymère conducteur électronique ou un latex d'un polymère conducteur électronique dans lequel sont dispersées de façon homogène

   1) des particules magnétiques permanentes, la plage des dimensions de particules allant de 5 à 20 nm, liées chimiquement au polymère par une liaison covalente, une liaison ionique ou une liaison complexante, éventuellement par l'intermédiaire d'un composé chimique organique, ou

   2) des particules magnétiques permanentes, la plage des dimensions de particules allant de 5 à 20 nm, sur lesquelles sont fixés des groupes organiques chargés positivement ou négativement pour jouer le rôle de dopant du polymère.

2. Matériau selon la revendication 1, caractérisé en ce que le polymère est choisi dans le groupe comprenant les polymères du pyrrole, les polymères du thiophène, les polymères de l'aniline, les polymères de dérivés substitués du pyrrole, les polymères de dérivés substitués du thiophène et les polymères de dérivés substitués de l'aniline.

3. Matériau selon l'une quelconque des revendications 1 et 2, caractérisé en ce que les particules magnétiques sont des particules d'oxyde répondant à la formule :

   $$Fe_2MO_4$$

   dans laquelle M est un atome de métal bivalent choisi parmi Fe, Co, Mn, Cu et Ni.

4. Matériau selon la revendication 1, caractérisé en ce que les particules magnétiques sont des particules d'oxyde de fer $\gamma$-$Fe_2O_3$.

5. Matériau selon la revendication 1, caractérisé en ce que le polymère est du polypyrrole ou du polyalkylthiophène.

6. Matériau selon la revendication 1, caractérisé en ce que le polymère conducteur est du poly(alkyl en $C_6$ - $C_{12}$)thiophène.

7. Matériau selon la revendication 1, caractérisé en ce que le polymère est un latex de polypyrrole.

8. Procédé de préparation d'un matériau selon l'une quelconque des revendications 1 à 7, caractérisé en ce qu'il consiste à polymériser un monomère précurseur du polymère conducteur électronique dans un milieu comprenant une suspension colloïdale de particules magnétiques auxquelles sont fixés des groupes organiques chargés négativement.

9. Procédé de préparation d'un matériau selon l'une quelconque des revendications 1 à 7, caractérisé en

ce qu'il consiste à polymériser un monomère précurseur du polymère conducteur électronique dans un milieu comprenant une suspension colloïdale de particules magnétiques auxquelles sont fixés des groupes organiques chargés positivement.

10. Procédé selon l'une quelconque des revendications 8 et 9, caractérisé en ce que l'on réalise la polymérisation par oxydation électrochimique en utilisant comme électrolyte la suspension colloïdale de particules magnétiques.

11. Procédé selon l'une quelconque des revendications 8 et 9, caractérisé en ce que l'on réalise la polymérisation par oxydation chimique.

12. Procédé selon la revendication 11, caractérisé en ce que le milieu comprend de plus des additifs permettant de former un latex de polymère.

13. Procédé selon l'une quelconque des revendications 10 et 11, caractérisé en ce que l'on règle à la valeur appropriée la quantité de particules magnétiques dispersées dans le polymère conducteur électronique en ajoutant un électrolyte au milieu de polymérisation et en réglant la quantité d'électrolyte ajoutée.

14. Procédé selon la revendication 8, caractérisé en ce que les groupes chargés négativement proviennent d'un agent complexant le fer et possédant de plus un groupe $COO^-$, $SO_3^-$, $OSO_3^-$ ou $PO_4^{2-}$ ne participant pas à la complexation du fer.

15. Procédé selon la revendication 14, caractérisé en ce que l'agent complexant est choisi parmi l'acide citrique et les composés de formules :

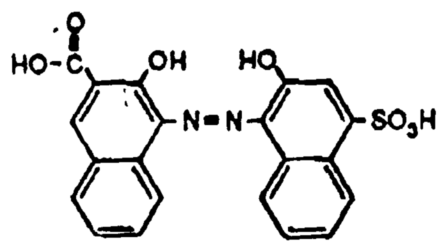

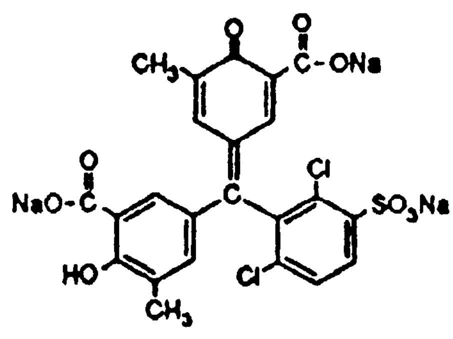

16. Procédé de préparation d'un matériau selon l'une quelconque des revendications 1 à 7, caractérisé en ce qu'il consiste à polymériser par oxydation chimique ou électrochimique un monomère précurseur du polymère conducteur électronique lié chimiquement à une particule magnétique.

17. Procédé selon la revendication 16, caractérisé en ce que la liaison chimique entre le monomère précurseur et la particule magnétique est une liaison covalente, une liaison ionique ou une liaison complexante.

18. Procédé selon la revendication 16, caractérisé en ce que la particule magnétique est liée au monomère précurseur par l'intermédiaire d'une chaîne aliphatique, aromatique ou aliphatique aromatique comportant en bout de chaîne un groupement approprié pour effectuer la liaison chimique avec la particule magnétique.

19. Procédé selon l'une quelconque des revendications 16 à 18, caractérisé en ce que l'on réalise la polymérisation en présence de monomère non lié à une particule magnétique et en ce que l'on contrôle la quantité de particules magnétiques dispersées dans le polymère formé en choisissant de façon appropriée la quantité de monomère non lié présente dans le milieu.

20. Procédé de préparation d'un matériau selon l'une quelconque des revendications 1, 5, et 6, caractérisé en ce qu'il consiste à polymériser par voie chimique un monomère précurseur du polymère conducteur électronique dans un milieu comprenant une suspension colloïdale de particules magnétiques modifiées par un agent tensioactif.

21. Procédé selon la revendication 20, caractérisé en ce que le manomère précurseur est l'octylthiophène et l'agent tensioactif est un sel de triéthanolamine d'un ester phosphorique acide.

22. Procédé de préparation d'un matériau selon l'une quelconque des revendications 1 à 7, caractérisé en ce qu'il consiste à mettre en contact avec une suspension de particules magnétiques chargées un polymère conducteur dopé par des ions de façon à échanger au moins une partie des ions dopant le polymère conducteur par les particules magnétiques chargées de la suspension.

## Patentansprüche

1. Elektrizitätsleitendes Material mit magnetischen Eigenschaften, umfassend ein elektronenleitfähiges Polymer oder einen Latex aus einem elektronenleitfähigen Polymer, in welchem in homogener Weise dispergiert sind
   1) permanent magnetische Teilchen, deren Teilchengrößen im Bereich von 5 bis 20 nm liegen, die über eine kovalente Bindung, eine Ionenbindung oder eine komplexbildende Bindung, gegebenenfalls mittels einer organischen chemischen Verbindung, chemisch an das Polymer gebunden sind, oder
   2) permanent magnetische Teilchen, deren Teilchengrößen im Bereich von 5 bis 20 nm liegen, an denen positiv oder negativ geladene organische Gruppen angebracht sind, um die Rolle eines Dotierungsmittels des Polymers zu spielen.

2. Material nach Anspruch 1, dadurch gekennzeichnet, daß das Polymer gewählt wird aus der Gruppe umfassend die Polymere von Pyrrol, die Polymere von Thiophen, die Polymere von Anilin, die Polymere von substituierten Derivaten von Pyrrol, die Polymere von substituierten Derivaten von Thiophen und die Polymere von substituierten Derivaten von Anilin.

3. Material nach einem der Ansprüche 1 und 2, dadurch gekennzeichnet, daß die magnetischen Teilchen Oxidteilchen sind, die der Formel entsprechen:
   $$Fe_2MO_4$$
   worin M ein zweiwertiges Metallatom, gewählt aus Fe, Co, Mn, Cu und Ni, ist.

4. Material nach Anspruch 1, dadurch gekennzeichnet, daß die magnetischen Teilchen Teilchen aus Eisenoxid $\gamma$-$Fe_2O_3$ sind.

5. Material nach Anspruch 1, dadurch gekennzeichnet, daß das Polymer Polypyrrol oder Polyalkylthiophen ist.

6. Material nach Anspruch 1, dadurch gekennzeichnet, daß das leitfähige Polymer Poly($C_6$-$C_{12}$-alkyl)thiophen ist.

7. Material nach Anspruch 1, dadurch gekennzeichnet, daß das Polymer ein Latex aus Polypyrrol ist.

8. Verfahren zum Herstellen eines Materials nach einem der Ansprüche 1 bis 7, dadurch gekennzeichnet, daß es darin besteht, ein Vorläufermonomer des elektronenleitfähigen Polymers in einem Medium zu polymerisieren, welches eine kolloidale Suspension von magnetischen Teilchen umfaßt, an denen negativ geladene organische Gruppen angebracht sind.

9. Verfahren zum Herstellen eines Materials nach einem der Ansprüche 1 bis 7, dadurch gekennzeichnet, daß es darin besteht, ein Vorläufermonomer des elektronenleitfähigen Polymers in einem Medium zu polymerisieren, welches eine kolloidale Suspension von magnetischen Teilchen umfaßt, an denen positiv geladene organische Gruppen angebracht sind.

10. Verfahren nach einem der Ansprüche 8 und 9, dadurch gekennzeichnet, daß die Polymerisation durch elektrochemische Oxidation ausgeführt wird, wobei als Elektrolyt die kolloidale Suspension von magnetischen Teilchen verwendet wird.

11. Verfahren nach einem der Ansprüche 8 und 9, dadurch gekennzeichnet, daß die Polymerisation durch chemische Oxidation ausgeführt wird.

12. Verfahren nach Anspruch 11, dadurch gekennzeichnet, daß das Medium zusätzlich Additive umfaßt, die es ermöglichen, einen Polymerlatex zu bilden.

13. Verfahren nach einem der Ansprüche 10 und 11, dadurch gekennzeichnet, daß die Menge der in dem elektronenleitfähigen Polymer dispergierten magnetischen Teilchen auf den geeigneten Wert eingestellt wird, indem ein Elektrolyt dem Polymerisationsmedium zugegeben wird und die Menge des zugegebenen Elektrolyts eingestellt wird.

14. Verfahren nach Anspruch 8, dadurch gekennzeichnet, daß die negativ geladenen Gruppen sich an einem Komplexbildner befinden, welcher das Eisen komplexiert und zusätzlich eine Gruppe $COO^-$, $SO_3^-$, $OSO_3^-$ oder $PO_4^{2-}$ besitzt, welche an der Komplexierung des Eisens nicht teilnimmt.

15. Verfahren nach Anspruch 14, dadurch gekennzeichnet, daß der Komplexbildner gewählt wird aus Citronensäure und den Verbindungen der Formeln:

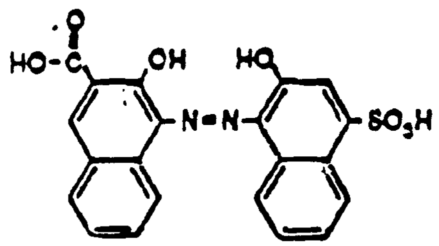

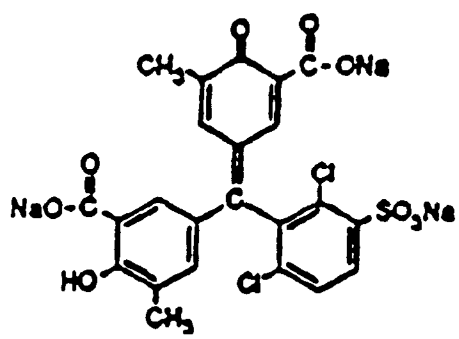

16. Verfahren zum Herstellen eines Materials nach einem der Ansprüche 1 bis 7, dadurch gekennzeichnet, daß es darin besteht, durch chemische oder elektrochemische Oxidation ein Vorläufermonomer des elektronenleitfähigen Polymers zu polymerisieren, welches chemisch an ein magnetisches Teilchen gebunden ist.

17. Verfahren nach Anspruch 16, dadurch gekennzeichnet, daß die chemische Bindung zwischen dem Vorläufermonomer und dem magnetischen Teilchen eine kovalente Bindung, eine Ionenbindung oder eine komplexbildende Bindung ist.

18. Verfahren nach Anspruch 16, dadurch gekennzeichnet, daß das magnetische Teilchen an das Vorläufermolekül mittels einer aliphatischen, aromatischen oder aliphatisch-aromatischen Kette gebunden ist, welche am Ende der Kette eine Gruppe trägt, die dazu geeignet ist, die chemische Bindung mit dem magnetischen Teilchen zu bewirken.

19. Verfahren nach einem der Ansprüche 16 bis 18, dadurch gekennzeichnet, daß die Polymerisation in Gegenwart von nicht an ein magnetisches Teilchen gebundenem Monomer durchgeführt wird und daß die Menge der in dem gebildeten Polymer dispergierten magnetischen Teilchen durch Auswahl der in dem Medium vorhandenen Menge an nicht gebundenem Monomer in geeigneter Weise kontrolliert wird.

20. Verfahren zum Herstellen eines Materials nach einem der Ansprüche 1, 5 und 6, dadurch gekennzeichnet, daß es darin besteht, auf chemischem Weg ein Vorläufermonomer des elektronenleitfähigen Polymers in einem Medium zu polymerisieren, welches eine kolloidale Suspension von magnetischen Teilchen, die durch ein oberflächenaktives Mittel modifiziert sind, umfaßt.

21. Verfahren nach Anspruch 20, dadurch gekennzeichnet, daß das Vorläufermonomer Octylthiophen ist und das oberflächenaktive Mittel ein Triethanolaminsalz eines Phosphorsäureesters ist.

22. Verfahren zum Herstellen eines Materials nach einem der Ansprüche 1 bis 7, dadurch gekennzeichnet, daß es darin besteht, ein mit Ionen dotiertes leitfähiges Polymer mit einer Suspension von geladenen magnetischen Teilchen zusammenzubringen, so daß wenigstens ein Teil der das leitfähige Polymer dotierenden Ionen durch die geladenen magnetischen Teilchen der Suspension ausgetauscht werden.

## Claims

1. Electricity conducting material having magnetic properties comprising an electronic conductive polymer or a latex of an electronic conductive polymer in which are homogeneously dispersed
   1) permanent magnetic particles with a particle size range between 5 and 20 nm, chemically bonded to the polymer by a covalent bond, an ionic bond or a complexing bond, optionally via an organic chemical compound or
   2) permanent magnetic particles, the particle size range being from 5 to 20 nm, to which are fixed positively or negatively charged organic groups to serve as the polymer dopant.

2. Material according to claim 1, characterized in that the polymer is chosen from the group including polymers of pyrrole, polymers of thiophene, polymers of aniline, polymers of substituted derivatives of pyrrole, polymers of substituted derivatives of thiophene and polymers of substituted derivatives of aniline.

3. Material according to either of the claims 1 and 2, characterized in that the magnetic particles are oxide particles according to the formula $Fe_2MO_4$, in which M is a divalent metal atom chosen from among Fe, Co, Mn, Cu and Ni.

4. Material according to claim 1, characterized in that the magnetic particles are iron oxide particles $\gamma$-$Fe_2O_3$.

5. Material according to claim 1, characterized in that the polymer is polypyrrole or polyalkyl thiophene.

6. Material according to claim 1, characterized in that the conductive polymer is poly(alkyl in $C_6$-$C_{12}$ position)thiophene.

7. Material according to claim 1, characterized in that the polymer is a polypyrrole latex.

8. Process for the preparation of a material according to any one of the claims 1 to 7, characterized in that it consists of polymerizing a precursor monomer of the electronically conductive polymer in a medium incorporating a colloidal suspension of magnetic particles on which are fixed negatively charged organic groups.

9. Process for the preparation of a material according to any one of the claims 1 to 7, characterized in that it consists of polymerizing a precursor monomer of the electronically conductive polymer in a medium incorporating a colloidal suspension of magnetic particles to which are fixed positively charged organic groups.

10. Process according to either of the claims 8 and 9, characterized in that polymerization takes place by electrochemical oxidation using as the electrolyte the colloidal suspension of magnetic particles.

**11.** Process according to either of the claims 8 and 9, characterized in that polymerization is carried out by chemical oxidation.

**12.** Process according to claim 11, characterized in that the medium also comprises additives making it possible to form a polymer latex.

**13.** Process according to either of the claims 10 and 11. characterized in that adjustment takes place to the appropriate value of the quantity of magnetic particles dispersed in the electronically conductive polymer by adding an electrolyte to the polymerization medium and by regulating the added electrolyte quantity.

**14.** Process according to claim 8, characterized in that the negatively charged groups come from an iron complexing agent and also having a $COO^-$, $SO_3^-$, $OSO_3^-$ or $PO_4^{2-}$ group not participating in the complexing of the iron.

**15.** Process according to claim 14, characterized in that the complexing agent is chosen from among citric acid and the compounds of formulas

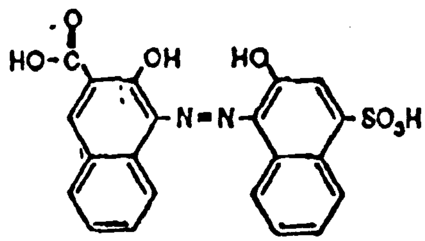

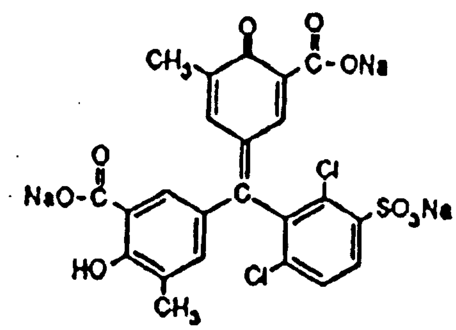

**16.** Process for the preparation of a material according to any one of the claims 1 to 7, characterized in that it consists of polymerizing by chemical or electrochemical oxidation a precursor monomer of the electronically conductive polymer chemically bonded to a magnetic particle.

**17.** Process according to claim 16, characterized in that the chemical bond between the precursor monomer and the magnetic particle is a covalent bond, an ionic bond or a complexing bond.

**18.** Process according to claim 16, characterized in that the magnetic particle is bonded to the precursor monomer by means of an aliphatic, aromatic or aliphatic aromatic chain having at the chain end an appropriate group for carrying out the chemical bonding with the magnetic particle.

**19.** Process according to any one of the claims 16 to 18, characterized in that polymerization is carried out in the presence of a monomer not bonded to a magnetic particle and in that the quantity of magnetic particles dispersed in the polymer formed is checked by appropriately choosing the unbonded monomer quantity present in the medium.

**20.** Process for the preparation of a material according to any one of the claims 1. 5 and 6, characterized in that it consists of chemically polymerizing a precursor monomer of the electronically conductive polymer in a medium incorporating a colloidal suspension of magnetic particles modified by a surfactant.

**21.** Process according to claim 20, characterized in that the precursor monomer is octylthiophene and the

surfactant is a triethanol amine salt of a phosphoric acid ester.

**22.** Process for the preparation of a material according to any one of the claims 1 to 4, characterized in that it consists of contacting with a suspension of charged magnetic particles a conductive polymer doped by ions in such a way as to exchange at least part of the ions doping the conductive polymer by charged magnetic particles of the suspension.

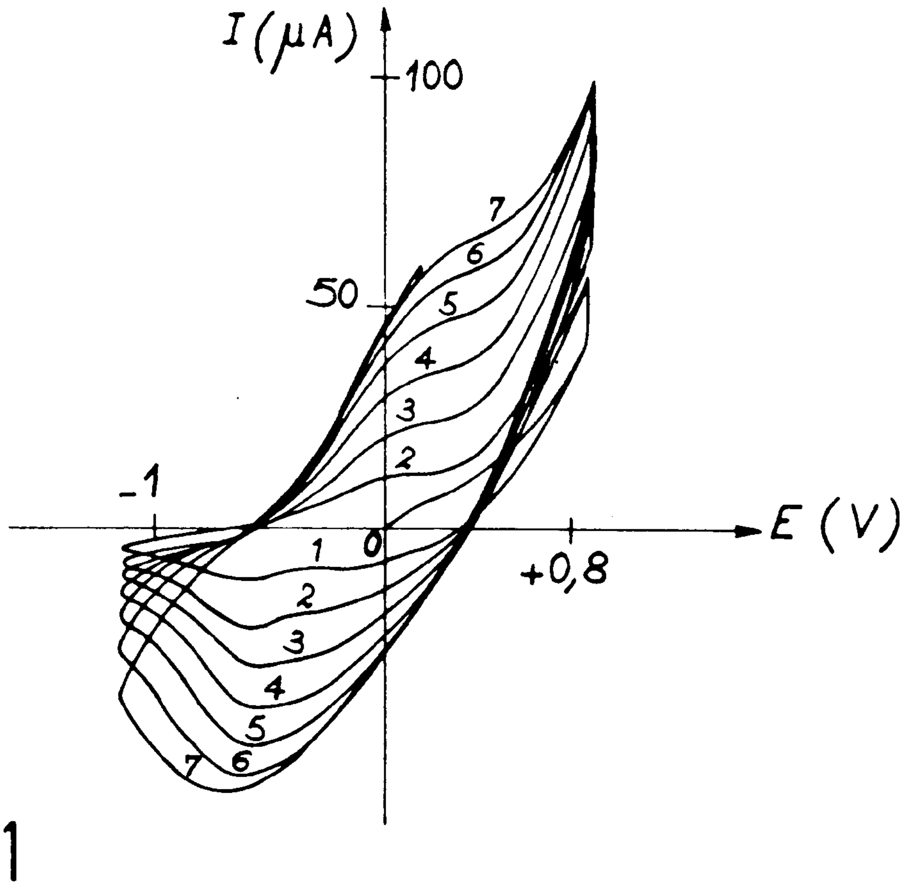


FIG. 1

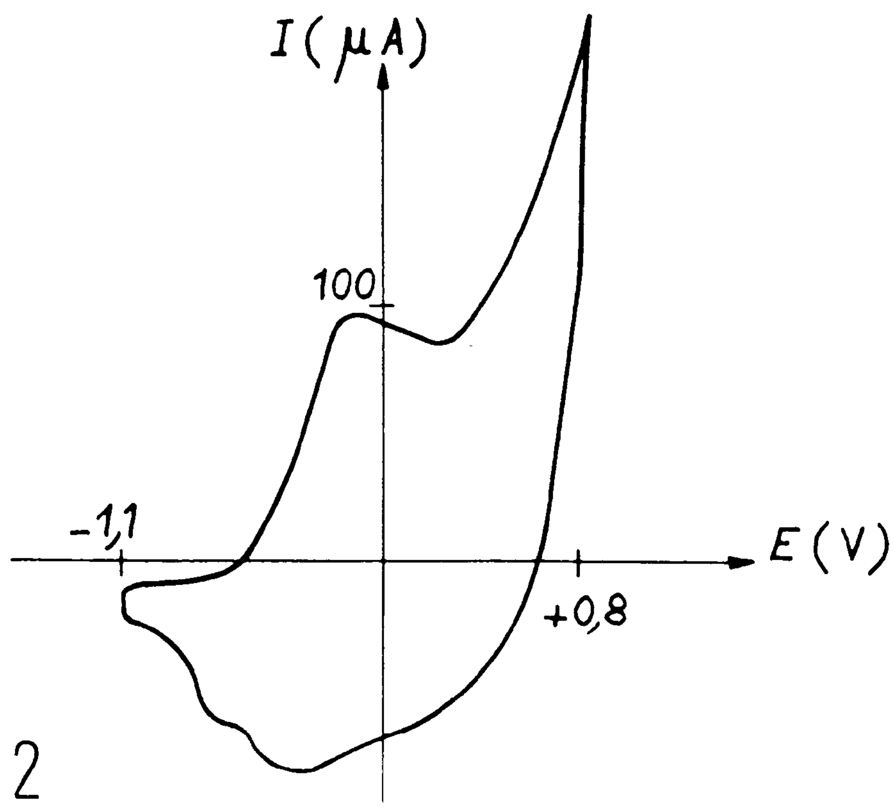


FIG. 2

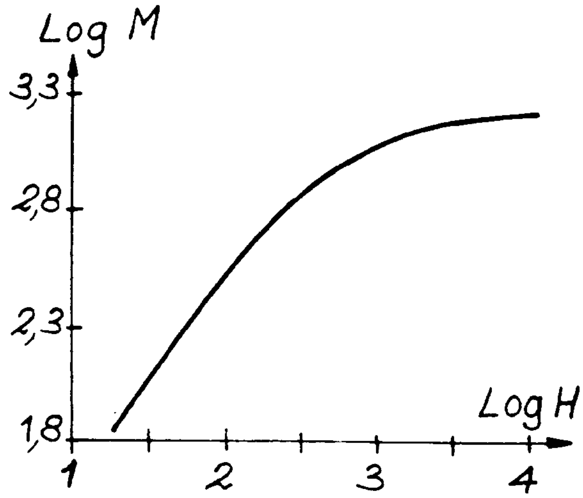


FIG. 3 (FFCC)

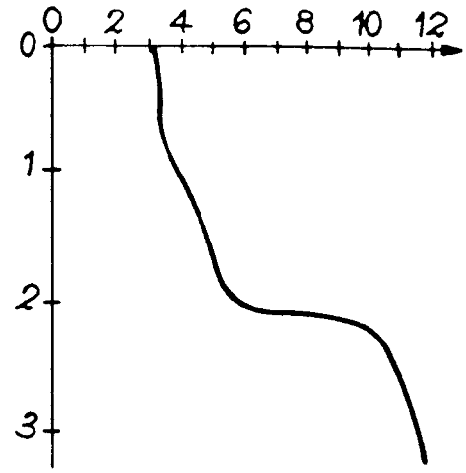


FIG. 4 (FFCC)

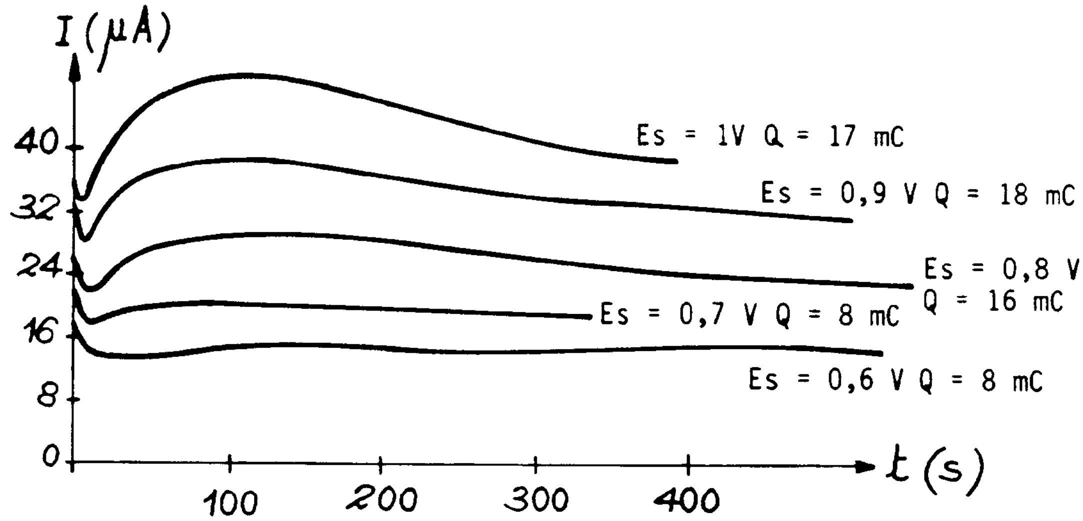


FIG. 5 (PPy-FFCC)

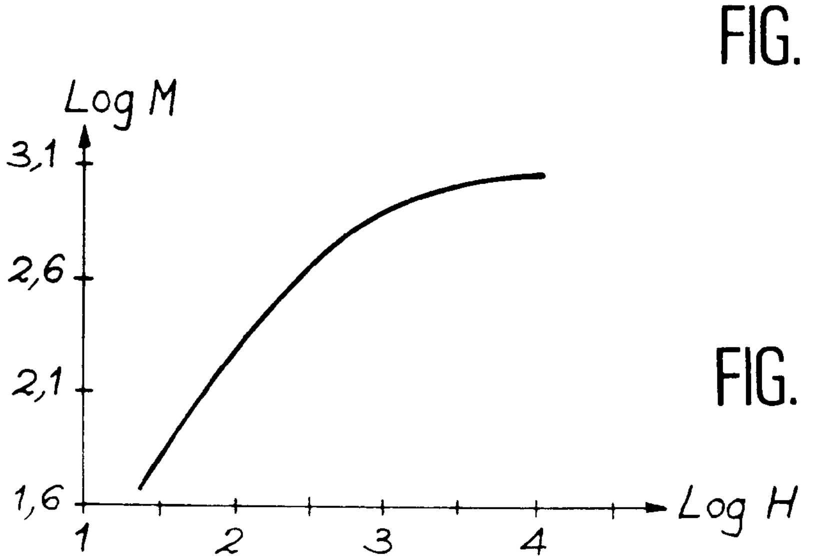


FIG. 6 (FFAZ)

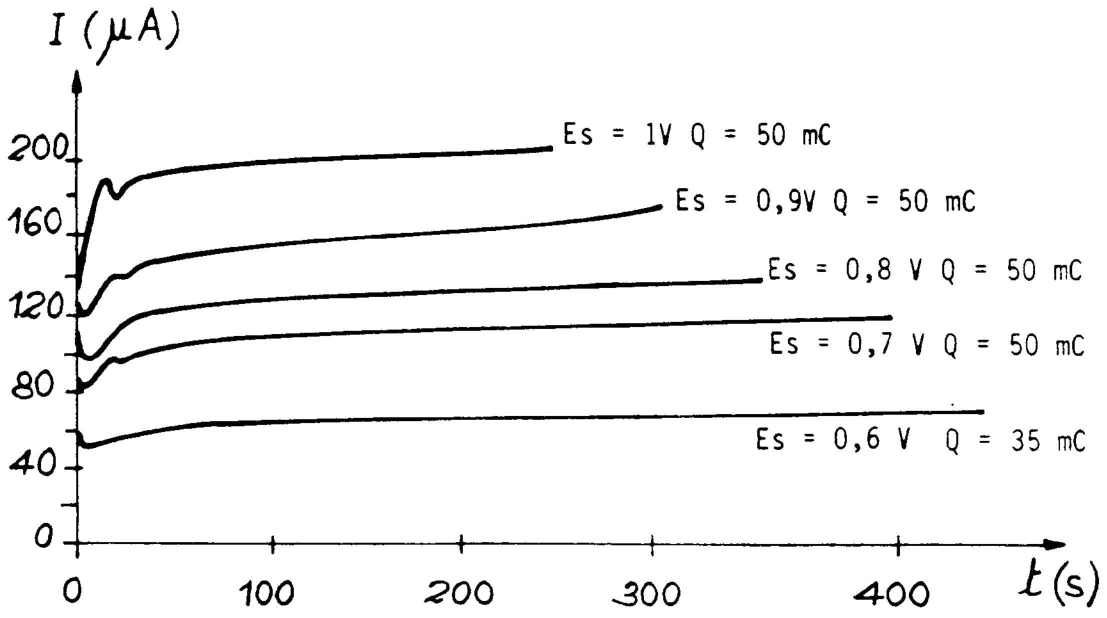


FIG. 7 (PPy-FFAZ)

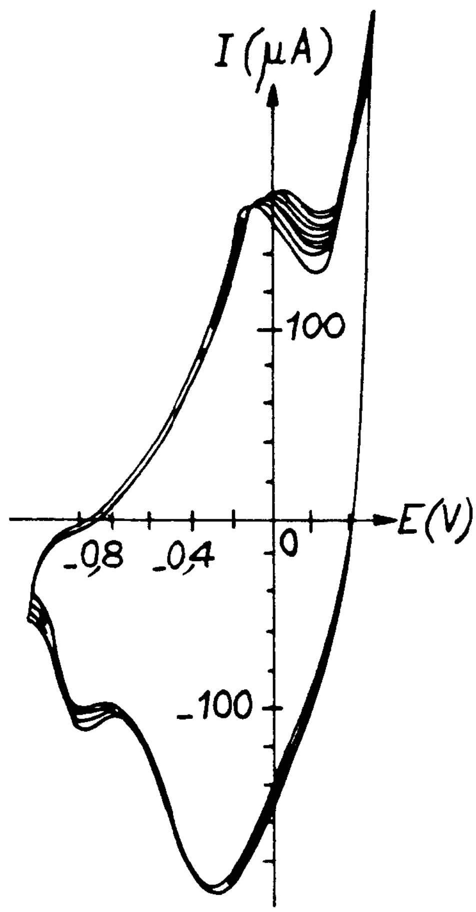


FIG. 8 (PPy-FFCC)

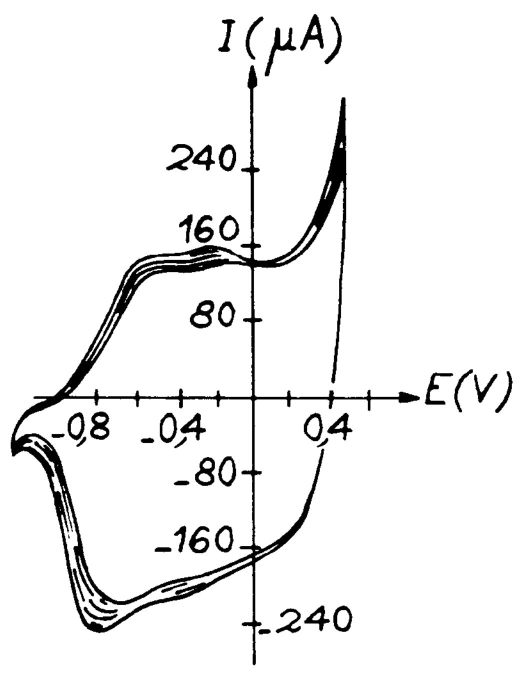


FIG. 9 (PPy-FFAZ)